# EUROPEAN PATENT APPLICATION

(11) **EP 2 020 728 A1**
(43) Date of publication of application: **04.02.2009**
(21) Application number: 07113790.5
(22) Date of filing: 03.08.2007
(51) Int. Cl.: H02J 15/00, B60H 1/00, F24H 7/04, F28D 20/02

(54) **An energy storage process and system**

(71) Applicant: Iveco Motorenforschung AG, 9320 Arbon (CH)
(72) Inventor: Gstrein, Wolfgang, 9320 Arbon (CH)
(74) Representative: Borsano, Corrado

(57) **Abstract**

An energy storage process comprising: electric energy generation and evaporation of a metal by means of said electric energy.
The process comprises as well the subsequent transfer of heat from said metal to an appropriate means, for re-use as heat or to generate mechanical or electric energy.
An energy storage system suitable to implement said process is also presented.

## Description

### FIELD OF THE INVENTION

The present invention relates to a process for storing and subsequently using energy, in particular for storing energy originally generated as electric energy.

### PRIOR ART

A problem that is commonly felt in the energy sector concerns the storage of electric energy generated by sources which are difficult to control. In such cases the intensity of the current that is generated and the periods in which it is generated cannot be controlled and are thus completely unrelated to the possible opportunities for use. Typical examples are some forms of alternative energy, such as the power generated by wind-power generators or photovoltaic power. Known methods for storing this type of energy are not capable of storing energy at suitably high densities, and are thus extremely bulky. For example, the energy can be stored in batteries, but, in addition to their large overall size, these also have a series of drawbacks, for example they cannot absorb high current peaks. Other systems such as ultracapacitors are inadequate in terms of energy density. Moreover, alternating current is usually generated and so such systems, in the same way as batteries, involve the use of a rectifier before the current is reconverted to alternating current. This increases the number of components that must be dimensioned for high currents even though, given the discontinuous generation, the total amount of energy that is produced may be relatively low. On the other hand, processes such as the generation of steam require high temperatures and thus very high pressures in order to achieve an adequate level of efficiency during the subsequent conversion from thermal energy to electric energy. Such temperatures and pressures must be applied to large volumes of fluid to absorb all of the energy that is generated. The storage of compressed air or gas also requires the use of very high pressures and guarantees low densities of stored energy. Finally, the use of mechanical energy storage systems such as flywheels is complex and does not guarantee high energy densities.

### SUMMARY

The problems described above have now been solved according to the present invention with an energy storage process comprising:
electric energy generation;
evaporation of a metal by means of said electric energy.

The process comprises the subsequent transfer of heat from said metal to an appropriate means, which can be the working fluid of a thermodynamic cycle for generating electric or mechanical energy, or the transfer of heat to a different kind of user. This can be achieved by means of the condensation of the metal vapour.

According to an embodiment of the invention, metal evaporation can be achieved by generating heat in electric resistors of an appropriate type powered by means of said electric energy so that heat is transferred to the metal by said resistors.

According to a preferred embodiment of the invention, the electric energy is used to heat the metal by means of an electric arc; according to an embodiment the arc is formed between an appropriately insulated electrode and the mass of the material to be evaporated. The metal and conditions for evaporation can be chosen according to specific requirements, for example the temperature (and consequent pressure) at which the energy is to be stored, also depending on the subsequent use.

The invention also relates to an energy storage system, through which the process described above can be implemented.

The invention relates in particular to that set forth in the claims, which are attached hereto.

### LIST OF DRAWINGS

The present invention will now be illustrated through the following detailed description of preferred but not exclusive embodiments, provided merely by way of example, with the help of the drawings attached hereto in which:
figure 1 is the diagram of an energy storage system according to the present invention;
figure 2 is a schematic illustration of an energy accumulator;
figures 3 and 4 show data indicating, respectively, the energy storage capacity of various storage means with respect to a same volume or weight, respectively, of automotive diesel fuel.

### DETAILED DESCRIPTION OF A PREFERRED EMBODIMENT

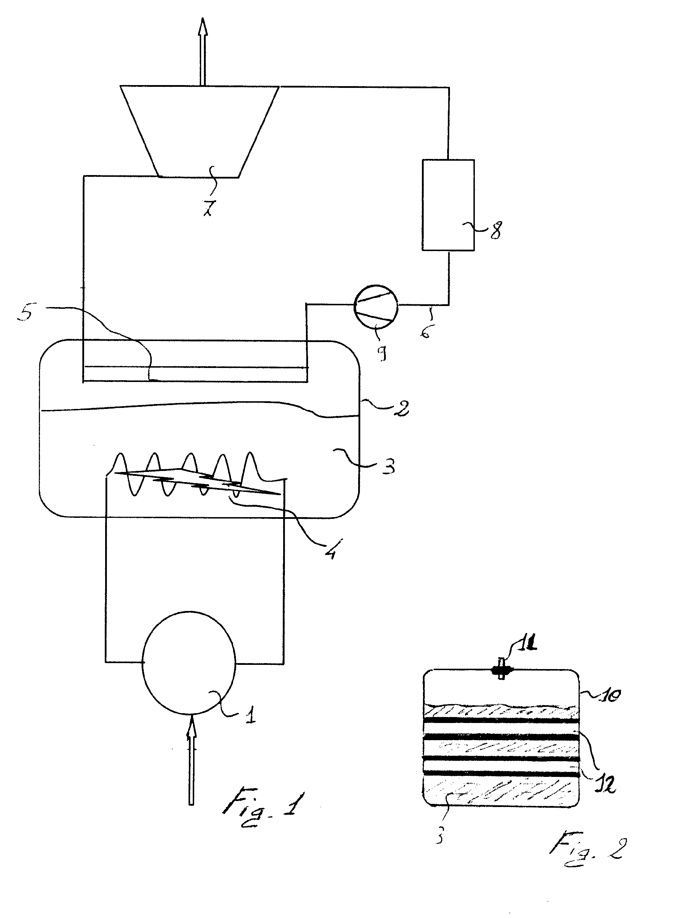

Figure 1 is a schematic illustration of an energy storage system according to a particular embodiment of the present invention. There is an electric generator 1, which can be of any known type, and in particular it can be a generator driven by an active energy source that may be discontinuous or difficult to use unless storage is possible. For example it can be a wind-power, or photovoltaic power generator, or also a system for regenerating the braking power of a vehicle or a plant, or a generator that uses hydraulic power, for example tidal or hydroelectric power. The scope of application is not limited to these types of energy, and the present invention is applicable in all cases in which energy storage is necessary or desirable, and where other storage methods are not convenient. A tank 2 contains the metal 3. The material can be a metal element or an alloy. In this case, the alloy may, according to a preferred embodiment, have a composition corresponding or close to an eutectic composition, to have a lower melting point. Preferred metals are lithium, which is advantageous for its low specific weight, thanks to which it is suitable for certain applications, such as transport where a light weight is essential, magnesium and aluminium, in particular aluminium for higher temperatures. Note that with lithium and magnesium (or other appropriately chosen metals) it is easy to work while maintaining the tank at pressures of even less than 10 bar. However, any metal regarded as appropriate can be employed according to the present invention.

Metal evaporation can be achieved in an appropriate way, such as by means of a heater 4, which can be an electric heater, for example one or more resistors suitable to be powered by the electric energy produced by the generator 1. The resistors can be buried in an appropriate position in the metal.

According to a preferred embodiment, the heater can be of the electric arc type. The arc can be achieved between two electrodes, or between an electrode and the mass of the still condensed metal. This solution is particularly simple, as only one insulated electrode must be provided for the mass of metal contained in the tank 2. In any case, the electrodes must be arranged in a suitable position to allow the arc to develop in an area of the tank in which the metal is in the vaporous state. Furthermore the difference in the level of the metal in the tank in the condensed state must also be considered.

The conditions under which evaporation can occur (and thus the size of the tank, the amount of metal it can contain...) must be chosen according to specific requirements. Depending on the type of metal and specific requirements, conditions can be achieved under which the metal passes directly from the solid state to the vaporous state and vice versa, or, more frequently, liquefaction occurs. In any case, solidification of the metal (for example if no energy is stored for a sufficiently long period of time) is not a problem. The tank can be designed as a closed system, suitable to exchange heat with the outside, in particular to transfer heat to an external fluid or user, for example by means of a heat exchanger 5 of a suitable type which can be fitted inside the tank.

The stored energy is transferred in the form of heat to be re-used. For example, there can be a steam or gas cycle to generate mechanical or electric energy. Figure 1 is a schematic illustration of a circuit in which a compressed fluid is heated or evaporated in the heat exchanger 5 for expansion in a turbine 7. A cooler 8 and the pump or compressor 9 complete the circuit in the usual way. The cooler can be a heat exchanger or a condenser depending on the type of cycle.

Alternatively, the heat can be used as such.

The tank can be constructed in a suitable way, for example it can be made of a ceramic or refractory material, if necessary reinforced by means of metal parts.

Figure 2 is a schematic illustration of a tank having a casing 10 made of an appropriate material containing the metal 3. The first electrode 11 can be connected to the generator and extend, appropriately insulated inside the casing. The other pole of the generator, which can also be a ground connection, can be connected to a second electrode (not shown) or, via an appropriate system, to the mass of the metal 3, to enable the formation of an electric arc with the first electrode.

A series of pipes 12 can run through the casing. Said pipes can be obtained integrally with the casing and are suitable to convey a fluid, which can be that of the circuit 6, or a heat conveying fluid, so as to receive heat through the walls of the pipes from the metal 3, in order to make the evaporated part condense. The pipes have ends that can be connected to external conduits and the inside of said pipes is completely insulated from the rest of the inside of the tank.

The tank can be heat- insulated towards the outside in an appropriate manner, also according to the need to preserve the heat inside it (whether for the short or long-term prior to use) and the need to protect the environment or surrounding elements and structures against the heat. The hazard rating of the tank can be reduced by placing it underground.

Considerable advantages can be achieved with the process according to the present invention. The tank can be dimensioned according to specific requirements and can store energy as latent heat, even at temperatures of more than 1000 and even 2000 °C, depending on the metal that is used, without reaching excessively high pressure levels. Said temperatures allow a steam cycle to be implemented to regenerate energy by transferring the heat to the fluid at high temperatures, even as high as 600 ° and above, to achieve an efficient thermodynamic cycle.

The electric energy that is generated can be used as such, whether direct or alternating current, without the need for rectifiers or inverters.

In case of thermodynamic cycles such as that to which the diagram in figure 1 refers, there is no need for large fluid volumes (for example water and vapour) which, unlike metal vapour, reach very high pressures. Valves and by-passes can be provided to regulate the amount of fluid that is heated and the amount of heat it receives, for example a by-pass can be placed in parallel to the heat exchanger 5, allowing the stored heat to be used as required.

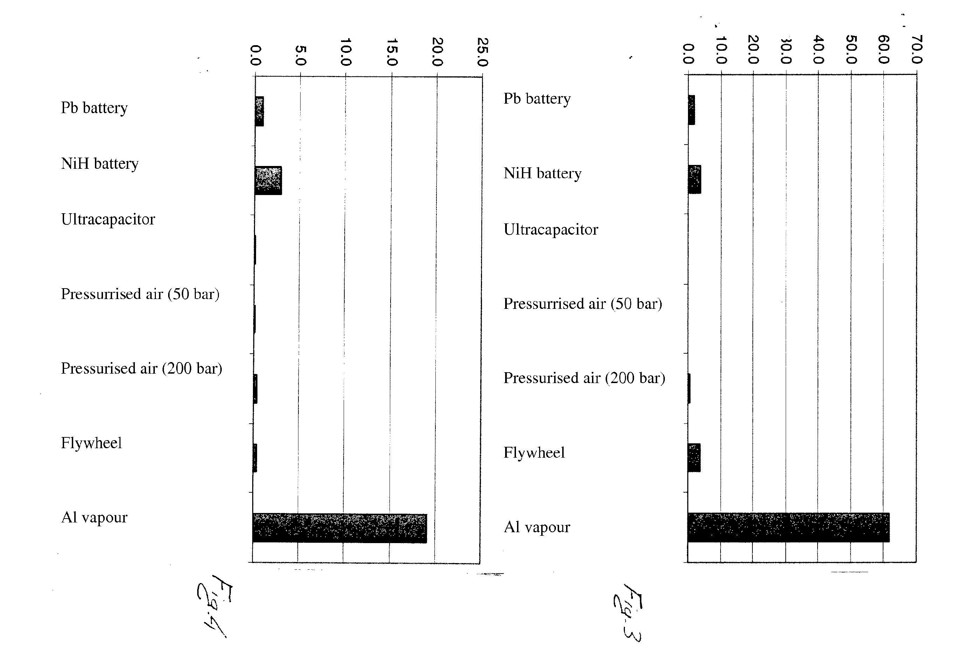

The density of the stored energy is considerably higher than with conventional energy storage systems, as illustrated in the bar charts in figures 3 and 4. The charts compare the stored energy, shown as a percentage in relation to the same volume (figure 3) or weight (figure 4) of automotive diesel fuel, for various conventional systems, with the energy that can be stored using aluminium vapour. As said above, also by means of vapours of other metals, much better results can be achieved with respect to known art processes.

The process allows to use the energy produced while the generator is operative later, when requested by the user.

## Claims

1. An energy storage process comprising:
electric energy generation;
evaporation of a metal by means of said electric energy.

2. Process according to claim 1 comprising the heating of said metal by means of resistors powered by said electric energy.

3. Process according to claim 1 comprising the heating of said metal by means of an electric arc powered by said electric energy.

4. Process according to any of the previous claims comprising the transfer of the latent heat from the metal evaporation to a heat conveying fluid or the working fluid of a thermodynamic cycle to generate mechanical or electric energy.

5. Process according to claim 4, wherein said thermodynamic cycle is a steam cycle.

6. Process according to any of the previous claims, wherein the metal is lithium, magnesium or aluminium, or an alloy comprising one or more of said elements.

7. Process according to any of the previous claims, wherein the metal is an alloy, preferably of eutectic composition.

8. Process according to any of the previous claims wherein evaporation occurs at a temperature of above 1000 °C.

9. Process according to any of the previous claims wherein evaporation occurs at a pressure of up to 10 bar.

10. Process according to any of the previous claims wherein the electric energy is generated by a wind, photovoltaic or hydraulic energy generator or by the braking energy of a vehicle.

11. An energy storage system comprising:
an electric generator (1);
a tank (2) containing metal (3);
heating means (4) suitable to make said metal evaporate when powered by means of the energy generated by said generator;
a heat exchanger (5) suitable to transfer the heat from said metal to a heat conveying fluid or the working fluid of a thermodynamic cycle to convert the heat that has been transferred into mechanical or electric energy.

12. System according to claim 11 suitable to perform the process according to any of the claims from 1 to 10.
